(19) Europäisches Patentamt
European Patent Office
Office européen des brevets

(11) EP 4 650 045 A1

(12) EUROPEAN PATENT APPLICATION

(43) Date of publication:
19.11.2025 Bulletin 2025/47

(21) Application number: 24176283.0

(22) Date of filing: 16.05.2024

(51) International Patent Classification (IPC):
B01J 19/32 (2006.01)

(52) Cooperative Patent Classification (CPC):
B01J 19/32; B01J 2219/3221; B01J 2219/32213;
B01J 2219/32217; B01J 2219/32227;
B01J 2219/32237; B01J 2219/32248;
B01J 2219/32251; B01J 2219/32258;
B01J 2219/32262; B01J 2219/32408;
B01J 2219/3325

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Sulzer Management AG
8401 Winterthur (CH)

(72) Inventor: The designation of the inventor has not
yet been filed

(74) Representative: IPS Irsch AG
Langfeldstrasse 88
8500 Frauenfeld (CH)

(54) **STRUCTURED PACKING ELEMENT WITH HIGH PERFORMANCE MICROSTRUCTURE**

(57) The present invention relates to a structured cross-channel packing element for a column for mass transfer and/or heat exchange between a heavy and a light fluid phase, wherein A structured cross-channel packing element for a column for mass transfer and/or heat exchange between a heavy and a light fluid phase, wherein the structured cross-channel packing element comprises at least two adjacent layers made of sheets each comprising openings, which are surrounded and separated from each other by separating elements, wherein at least two of the at least two layers are arranged parallel and in touching contact with each other so that an open space extending from one end to the opposite end of the at least two layers is provided between them so that at least one of the heavy and the light fluid phase may flow through it, wherein neighboring opening in the sheet of at least one layer overlap with each other so that each cross-sectional plane of the at least one layer comprises at least one opening s, wherein the ratio between the average grid thickness g of at least one layer and the sheet material thickness s is at most 5.0, and wherein the average grid thickness g of at least one layer is less than 1.0 mm.

Fig. 5

EP 4 650 045 A1

## Description

The present invention relates to a structured cross-channel packing element for a column for mass transfer and/or heat exchange between a heavy fluid phase and a light fluid phase.

Structured packing elements are used in mass transfer columns, such as for instance in fractionation columns, distillation columns, absorption columns, extraction columns or flue gas scrubbers. The structured packings elements serve for the improvement of the mass transfer and/or heat transfer between at least two fluid phases of different density, wherein the structured packings elements are typically operated in counter-current flow. While in distillation and absorption applications, the light phase is a gas or vapor and the heavy phase is a condensate or liquid, in extraction processes both phases are liquids with different density. The structured packing elements comprise a plurality of different layers, each of which providing surface area for the heavier phase that trickles down along the surface of the layer and spreads. In addition, between the different layers of the structured packing elements open spaces are provided, which are filled with the light phase (e.g. vapor or gas in distillation) and provide a path for the light phase to ascend, while it is driven by a pressure gradient. The pressure gradient is required to overcome the flow resistance. In the typical case of counter-current mass transfer, the average flow direction of the light phase is from bottom to top of the structured packing element and thus opposite to the average flow direction of the heavy phase. By allowing the one heavy phase to spread on the surface of the structured packing element, an interface is created between the at least two phases so that an efficient heat and mass transfer between the phases is established at the interface. There may also be applications with more than one heavy phase. An example is extractive distillation.

A common type of structured packing elements is the so-called cross-channel corrugated sheet packing, which is assembled from a plurality of for instance corrugated sheets, which are arranged parallel and in touching contact with each other. Typically, the corrugated metal sheets are fixed with each other by means of several rods penetrating the corrugated sheets perpendicular to the longitudinal section of the corrugated sheets, wherein the rods are fixed with the first and last corrugated sheet by means of a washer and a nut or by bending the rod. Each corrugated sheet comprises a plurality of periodic deformations, such as alternately oriented peaks and valleys, wherein adjacent corrugated sheets are oriented such that the corrugations of the adjacent corrugated sheets intersect in crisscross fashion with the corrugations of the corrugated sheets extending obliquely relative to the vertical or longitudinal direction, thus forming inclined channels which continuously cross one another. These channels positively influence the flows of the gas phase and of the liquid phase within the packing and facilitate the mass transfer between the phases. That is, the gas phase and the liquid phase are brought into contact in the channels of the structured packing element and the mass transfer as well as the heat transfer between the phases is thus facilitated. More specifically, ascending gas comes into contact with liquid, which is present on the surface of the sheets forming the channels when it flows downwardly through the mass transfer column. During this contact, a component enriched in the gas can transfer into the liquid and vice versa; this means that an efficient mass transfer can take place. Such packings are described for example in DE 1 253 673, in CA 1270751 and in US 6,206,349 B1.

The amount of mass transfer per unit time is proportional to the area of the interface between the gas and the liquid, wherein the area of the interface gets larger with increasing portion of the surface of the packing element's layers which is wetted by the liquid. Thus, it is important for a high mass transfer efficiency that the surface of the structured packing element is well covered by liquid, since failure results in a waste of packing material as the light phase is not as much in contact with the heavy phase as it could be given the physical area of the packing.

Apart from a high mass transfer efficiency, the capacity is an important aspect for a structured packing element. As the flow rates of the light and heavy phases in a structured packing element increase, the pressure drop in the structured packing element increases. At a certain pressure drop, gravity is not strong enough to counteract the friction between the two phases and the heavy phase or liquid, respectively, is entrained in the light phase or gas, respectively, and thus cannot descend anymore along the structured packing element. At this point, the mass transfer breaks down and this situation is called flooding. This flooding point determines the capacity of a structured packing element, i.e. the capacity of a structured packing element is characterized by pairs of maximum flow rates of the counter-current phases beyond which an increase of either of the two flow rates leads to flooding. The flooding point relates to a characteristic pressure drop, which is generally in the order of 10 mbar per meter packing height.

It would be optimal for a structured packing element to have an excellent mass transfer efficiency as well as an excellent capacity, because this would allow to reduce the diameter and/or height of the mass transfer column at a given capacity and thereby to minimize the investment costs for the mass transfer column. However, these two characteristics depend on opposite trends with regard to the specific area and other geometrical parameters. More specifically, a high specific area, i.e. a high quotient of the geometrical area of the structured packing element divided by the volume it occupies, leads to an intensive contact between the light and heavy phases, why a respective structured packing element has a high mass transfer efficiency, which is commonly expressed in terms of number of theoretical stages per meter packing height NTSM. However, a structured packing element with a high specific area is characterized by a high flow resistance for the light phase, why a respective structured packing element has - at a given flow rate of the light phase - a higher pressure drop per packing height and thus a lower capacity than a packing with a lower specific area.

In order to increase the mass transfer efficiency at a given capacity or to increase the capacity at a given mass transfer efficiency, respectively a structured cross-channel packing element for a column for mass transfer and/or heat exchange between a heavy and a light fluid phase has been already proposed in WO2021/073859 A1, wherein the structured cross-channel packing element comprises at least two adjacent layers made of expanded metal sheets each comprising openings, which are surrounded and separated from each other by separating elements, wherein at least two of the at least two layers are arranged in the longitudinal direction of the packing element parallel and in touching contact with each other so that an open space extending from one end to the opposite end of the at least two layers is provided between them so that at least one of the heavy and the light fluid phase may flow through it, wherein the ratio between the average width of at least one and preferably at least 50% of the separating elements between adjacent openings and the sheet material thickness is at least 15, wherein the ratio between the maximum distance between at least two of the at least two layers measured in the plane being perpendicular of the longitudinal direction and the average width of the separating elements is at least 4, and wherein the ratio between the distance between two openings being in the direction perpendicular to the stretch direction of the expanded metal sheet adjacent to a separating element and the average width of this separating element is preferably for at least 50% of all separating elements 4 to 6. The average grid thickness g of each layer of the respective structured packing element is 1.0 to 1.4 mm and the ratio between the average grid thickness g of each layer and the sheet material thickness s is at least 6. However, even if this structured packing element has an improved mass transfer efficiency at a given capacity, still the pressure drop is comparably high and the capacity is limited.

In view of this, the object underlying the present invention is to provide a cost efficient multi-purpose structured packing element having a lower pressure drop as well as higher mass transfer efficiency at a given capacity.

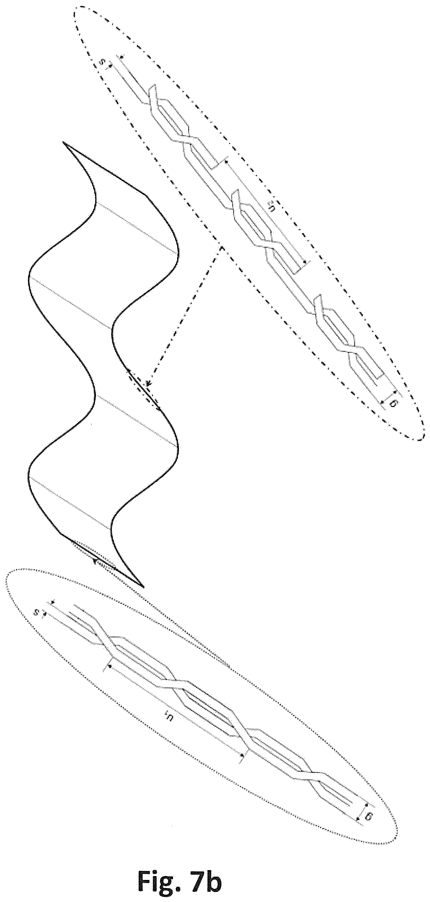

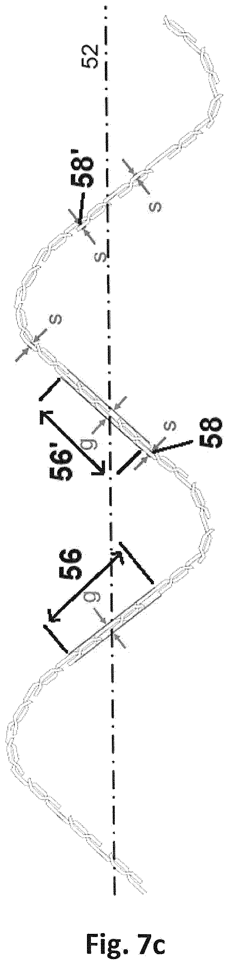

In accordance with the present invention, this object is solved by providing a structured cross-channel packing element for a column for mass transfer and/or heat exchange between a heavy and a light fluid phase, wherein the structured cross-channel packing element comprises at least two adjacent layers made of sheets each comprising openings, which are surrounded and separated from each other by separating elements, wherein at least two of the at least two layers are arranged parallel and in touching contact with each other so that an open space extending from one end to the opposite end of the at least two layers is provided between them so that at least one of the heavy and the light fluid phase may flow through it, wherein neighboring openings in the sheet of at least one layer overlap with each other so that each cross-sectional plane of the at least one layer comprises at least one opening, wherein the ratio between the average grid thickness g of at least one layer and the sheet material thickness s is at most 5.0, and wherein the average grid thickness g of at least one layer is less than 1.0 mm. The sheet material thickness s means in this connection the thickness of the material, which forms the layers, wherein the average grid thickness g of a layer is the average distance between a plane touching the outermost points of one of the two surfaces and a plane touching the outermost points of the opposite surface of the layer, as further described and shown further below with regards to figures 7b and 7c.

This solution bases on the surprising finding that the combination of lowering the grid thickness g of at least one layer to less than 1.0 mm, of lowering the ratio between the average grid thickness g of at least one layer and the sheet material thickness s to at most 5.0 and of providing enough openings so that the openings in the sheet of at least one layer overlap with each other so that each cross-sectional plane of the at least one layer comprises at least one opening and preferably a plurality of openings, mass transfer efficiency - capacity - barrier of the structured cross-channel packing element is moved to significantly higher numeric values. In other words, the combination of the aforementioned measures leads to a structured cross-channel packing element, which has a higher mass transfer efficiency at higher capacities. Surprisingly, the structured cross-channel packing element in accordance with the present invention is further characterized by a significantly lower pressure drop than common structured cross-channel packing element having the same specific area. Without wishing to be bound to any theory, it is considered that the low pressure drop of the structured cross-channel packing element in accordance with the present invention is mainly due to the comparably low average grid thickness g and the comparably low ratio between the average grid thickness g of at least one layer and the sheet material thickness s.

This allows to drastically reduce the capital expenditures as well as the operational costs of the mass transfer columns including the structured cross-channel packing element in accordance with the present invention, since the mass transfer columns may be embodied for a predetermined mass transfer efficiency and capacity shorter and with less diameter.

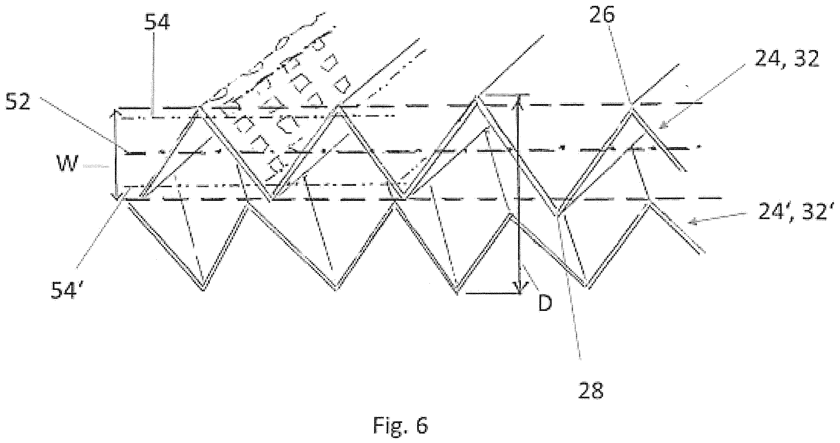

In accordance with the present invention, the average grid thickness g of at least one layer of the structured cross-channel packing element is less than 1.0 mm. The grid thickness g of a layer of the structured cross-channel packing element may be measured by a mechanical, optical or other measurement method, such as a mechanical measurement method using a micrometer screw, a caliper or a micrometer. A particularly suitable measurement method for determining the average grid thickness g of a layer of the structured cross-channel packing element makes use of a micrometer screw. A micrometer screw is a known measurement device comprising one fixed and one moveable measurement area, wherein the moveable measurement area is adjustable with a fine thread. Both measurement areas may contact or touch each other, respectively, if the moveable measurement area is completely moved to the fixed measurement area. Both measurement areas are flat and circular. More specifically, the grid thickness is measured at at least five and more preferably at at least 10 measuring points, each of which being located between an uppermost point (peak) and a neighbouring lowermost point (valley) of a layer of the structured cross-channel packing element, whereafter the single measurement values are averaged. Preferably, the measuring surface of the measuring plate of the micrometer screw has a radius of about 3.2 mm for determining the average grid thickness g of a layer of a structured cross-channel packing element having a specific surface area of less than 400 $m^3/m^2$, whereas the measuring surface of the measuring plate of the micrometer screw has preferably a radius of about 1.5 mm for determining the average grid thickness g of a layer of a structured cross-channel packing element having a specific surface area of 400 $m^3/m^2$ or more. It is particularly preferred that the measuring points are located in the least deformed portions of the layer being described further below in connection with figures 6, 7b and 7c. For the sake of completeness, it is noted that, if the separating elements of the layer comprise one or more of the preferred protrusions as described further below, the protrusions have of course to be included in the measurement, i.e. if the protrusions are the outermost points of one or both of the two surfaces of the layer, the at least five and more preferably at least 10 measuring points comprise each a protrusion.

Sheet material thickness means in accordance with the present invention the thickness of the material, which constitutes or forms the layer, respectively. Since in accordance with the present invention the layers of the structured cross-channel packing element are made by a sheet, the sheet material thickness s is the sheet thickness. Should the sheet thickness vary over the area of the layer, the sheet material thickness s is the thickness of the sheet measured at one of the outer edges of the sheet material thickness by means of preferably a micrometer screw. For instance, the thickness of the material forming the layer is measured at at least two, preferably at at least three and more preferably at at least five locations with the micrometer screw, before the obtained numeric values are summed up and averaged by dividing the sum by the number of measurements. Good results are for instance obtained, when the thickness is measured at 2 to 20, preferably 2 to 10, more preferably 3 to 10 and most preferably 5 to 10 locations at one or more of the outer edges of the layer with the micrometer screw, wherein the different locations are about 3 cm distant from each other along the outer edge. Preferably, the measuring surface of the measuring plate of the micrometer screw has a radius of about 0.3 mm, wherein the measuring plate has preferably the form of a needle. It is particularly preferred that the measuring points are located in the least deformed portions of the layer being described further below in connection with figures 6, 7b and 7c.

In accordance with the present invention, the structured cross-channel packing element comprises at least two layers being arranged in the longitudinal direction of the structured cross-channel packing element parallel with each other. Parallel arrangement of two layers means in accordance with the present invention that one of the layers is inclined by an angle of at most +/- 20°, preferably of at most +/- 10°, more preferably of at most +/- 5°, still more preferably of at most +/- 2° with regard to the other layer and is most preferably not inclined at all with regard to the other layer. In turn, the longitudinal direction of the structured cross-channel packing element is the direction from the top area to the bottom area of the structured cross-channel packing element when it is incorporated in a mass transfer and/or heat exchange column, i.e. the longitudinal direction is the direction from the top to the bottom of the mass transfer and/or heat exchange column. In other words, it is the intended gravity-driven flow direction of the heavier phase during the operation of the structured cross-channel packing element and mass transfer and/or heat exchange column, respectively. More specifically, the longitudinal direction of the structured cross-channel packing element may be determined as follows: The structured cross-channel packing element is placed on a horizontal area so that the layers of the structured cross-channel packing element being arranged in parallel and in touching contact with each other extend in the vertical direction and so that the open spaces (or channels, respectively, which are surrounded and thus defined by periodic deformations of the layers) extending from one end to the opposite end of the layers extend from the top to the bottom of the structured cross-channel packing element. The longitudinal direction is then the shortest line from the top to the bottom of the so arranged structured cross-channel packing element, or - in other words: Heavy phase, for instance water, which is dropped onto the top of the so arranged structured cross-channel packing element flows gravity-driven downwards along the open spaces, wherein the longitudinal direction is the average flow direction of the heavy phase.

Moreover, in accordance with the present invention neighboring openings in the sheet of at least one layer overlap with each other so that each cross-sectional plane of the at least one layer comprises at least one opening, preferably at least two openings and more preferably a plurality of openings. Cross-sectional plane of a layer of the structured cross-channel packing element means in this connection the plane extending in the direction of the sheet material thickness, i.e. the plane being perpendicular to the plane defined by the length and width direction of the layer. Preferably, the openings in the sheets of at least 50%, preferably at least 75%, more preferably at least 80%, still more preferably at least 90%, yet more preferably at least 95% and most preferably all of the at least two layers overlap with each other so that each cross-sectional plane of the at least one layer comprises at least one opening and preferably a plurality of openings.

In a further development of the idea of the present invention, it is suggested that the ratio between the average grid thickness g and the sheet material thickness s of at least one layer is 1.0 to less than 5.0, preferably more than 1.4 to 4.0, more preferably 1.8 to 3.0 and most preferably 2.0 to 2.6.

In accordance with a further preferred embodiment of the present invention, the ratio between the average grid thickness g and the sheet material thickness s of at least 50%, preferably at least 75%, more preferably at least 80%, still more preferably at least 90%, yet more preferably at least 95% and most preferably all of the at least two layers is at most 5.0, preferably 1.0 to less than 5.0, more preferably more than 1.4 to 4.0, even more preferably 1.8 to 3.0 and most preferably 2.0 to 2.6.

In accordance with the present invention, the average grid thickness g of at least one layer is less than 1.0 mm. Good results are in particular obtained, when the average grid thickness g of at least one layer is 0.05 to 0.8 mm, more preferably 0.07 to 0.5 mm and most preferably 0.1 to 0.4 mm.

Furthermore, it is preferred that the average grid thickness g of at least 50%, preferably at least 75%, more preferably at least 80%, still more preferably at least 90%, yet more preferably at least 95% and most preferably all of the at least two layers is less than 1.0 mm, preferably 0.05 to 0.8 mm, more preferably 0.07 to 0.5 mm and most preferably 0.1 to 0.4 mm.

In accordance with a further particularly preferred embodiment of the present invention, at least 80%, preferably at least 90%, more preferably at least 95%, still more preferably at least 99% and most preferably all openings of at least one layer are arranged in several adjacent essentially vertical rows and in several adjacent essentially horizontal rows. Essentially vertical means a line having an angle with regard to the longitudinal direction of -10° to +10°, preferably -5° to +5° and most preferably 0°, wherein essentially horizonal means a line having an angle with regard to the longitudinal direction of 80° to 100°, preferably 85° to 95° and most preferably 90°. In each essentially horizontal row a line having an angle with regard to the longitudinal direction of 80° to 100°, preferably 85° to 95° and most preferably 90° crosses at least five openings through each a position at which the width of the respective opening is 60 to 100% of the maximal width d of the respective opening and in each essentially vertical row a line having an angle with regard to the longitudinal direction of -10° to +10°, preferably -5° to +5° and most preferably 0° crosses at least five openings through each a position at which the length of the respective opening is 60 to 100% of the maximal length c of the respective opening. This embodiment easily realizes that neighboring openings in the sheet of at least one layer overlap with each other so that each cross-sectional plane of the at least one layer comprises at least one opening and preferably a plurality of openings. Thereby, the liquid is forced through the plurality of separating elements being arranged between adjacent openings leading to an excellent distribution of the liquid over the whole surface of the sheet of the respective layer of the structured cross-channel packing element.

It is particularly preferred in the aforementioned embodiment that at least 80%, preferably at least 90%, more preferably at least 95%, still more preferably at least 99% and most preferably all openings of at least one essentially horizontal row of at least one layer have essentially the same maximal width d and essentially the same maximal length c, wherein essentially the same maximal length c means that the maximal length c of each opening is 60 to 140% of the average maximal length c of the at least one essentially horizontal row of all openings of the at least one layer and essentially the same maximal width d means that the maximal width d of each opening is 60 to 140% of the average maximal width d of all openings of the at least one essentially horizontal row of the at least one layer, wherein maximal width d of an opening is the width of the opening at a position being located at the half of the maximal length c of the opening.

Good results are in particular obtained, when the average maximal length c of the openings of a layer of the structured cross-channel packing element is 2 to 15 mm and more preferably 5 to 10 mm.

In turn, the average maximal width d of the openings of a layer of the structured cross-channel packing element is preferably 0.2 to 8 mm and more preferably 0.5 to 4 mm.

In a further development of the idea of the present invention, it is proposed that at least one of the at least two layers is obtainable or more preferably is obtained by a method comprising the steps of cutting and stretching a thin metal plate and then deforming the expanded metal sheet to a corrugated sheet. Due to the cutting and stretching the resulting sheet has openings with typically an essentially elliptic, lenticular, trapezoidal or rhombic and usually of an essentially lenticular or trapezoidal shape. Thus, an expanded metal sheet is in fact a grid comprising openings, wherein each opening is surrounded by separating elements having each a width b, wherein the separating elements of adjacent openings are connected with each other at junction points. This embodiment has the significant advantage that the structured cross-channel packing element is not based on the use of expensive layer material, but that the layer is simply produced of an expanded metal sheet, i.e. by cutting and stretching a thin metal plate, preferably made of stainless steel, and then in a second step deforming the expanded metal sheet to a corrugated sheet. Thus, a cost-efficient raw material is used and the required amount of material of this cost-efficient raw material is even reduced by stretching it. Good results are in particular obtained, when at least 50%, more preferably at least 75%, even more preferably at least 80%, still more preferably at least 90%, yet more preferably at least 95% and most preferably all of the at least two layers are obtainable or more preferably are obtained by a method comprising the steps of cutting and stretching a thin metal plate and then deforming the expanded metal sheet to a corrugated sheet. Again, corrugated sheet means the deformed sheet forming the layers of the structured cross-channel packing element, whereas sheet means the material having the sheet material thickness s.

Good results are in particular achieved, when the stretching factor of the expanded metal sheet of the at least two layers is between 1.1 and 1.5 and more preferably between 1.15 and 1.30.

Thus, it is preferred that at least one, preferably at least 50%, more preferably at least 75%, even more preferably at least 80%, still more preferably at least 90%, yet more preferably at least 95% and most preferably all of the at least two layers are corrugated expanded metal sheets.

In addition, it is preferred that at least 50%, preferably at least 75%, more preferably at least 80%, still more preferably at least 90%, yet more preferably at least 95% and most preferably all of the segments Y2 of at least one layer, which extend in the longitudinal direction of the structured cross-channel packing element between a first line touching, seen in the longitudinal direction from top to bottom, the lowermost points of the openings of a first essentially horizontal row and a second line touching the uppermost points of the respective openings of a second essentially horizontal row comprising openings being located in the same essentially vertical row below and adjacent to the openings of the first essentially horizontal row and which extend in the direction being perpendicular to the longitudinal direction of the structured cross-channel packing element from one end to the opposite end of the layer, comprise less openings than the segments Y1 being comprised between two adjacent segments Y2. Thereby, it is achieved that some areas, namely the segments Y1, of the respective layer of the structured cross-channel packing element comprise more openings than other areas, namely the segments Y2. In turn, this effects that liquid is led in the Y1 segments slightly oblique over the separating elements being provided between adjacent openings, which results in a transverse distribution. Moreover, the segments Y2 allow to divide the liquid onto two separating elements provided in the below Y1 segment, which significantly increases the wettability so that liquid flowing over the alternating Y1 and Y2 segments is periodically transversely distributed and mixed.

In accordance with a further particularly preferred embodiment of the present invention, at least 50%, preferably at least 75%, more preferably at least 80%, still more preferably at least 90%, yet more preferably at least 95% and most preferably all of the separating elements comprise a protrusion. Preferably, the protrusion is arranged in a segment, which extends in the longitudinal direction of the structured cross-channel packing element between a first line touching, seen in the longitudinal direction from top to bottom, the lowermost points of the openings of a first essentially horizontal row and a second line touching the uppermost points of the respective openings of a second essentially horizontal row comprising openings being located in the same essentially vertical row below and adjacent to the openings of the first essentially horizontal row and which extend in the direction being perpendicular to the longitudinal direction of the structured cross-channel packing element from one end to the opposite end of the layer. The provision of a protrusion in the separating elements of the respective layer of the structured cross-channel packing element increases the aforementioned effects of periodically transversely distributing and mixing the liquid flowing over the respective layer. More specifically, the protrusion being provided on a separating element deflects the liquid flowing to an edge of the protrusion, as a consequence of which liquid is merged and mixed together in the segment of the separating element, which has due to the protrusion a smaller area being available for the flow of liquid, since the area covered by the protrusion does not allow the liquid, at least if present in form of a thin film, to flow over the protrusion or, if the liquid is present in the form of a thicker film, only allows a portion of the liquid film to flow over the protrusion, but not the entire share of the liquid film. Downwards from the protrusion, a larger area of the separating element is available for the liquid flow so that the liquid spreads.

The present invention is not particularly limited concerning the form of the protrusions provided on the separating elements. Moreover, at least one, some or each of the protrusions comprise(s) a dimple on its top area, i.e. the protrusions may have the form a truncated pyramid or truncated conus, wherein a dimple is provided in the top area thereof.

Good results are in particular obtained, when at least one, some or each of the protrusions has/have a height of 0.1 to 0.5 mm and more preferably of 0.15 to 0.3 mm. Height of protrusion means in this connection the distance between the uppermost point of the protrusion and the lowermost point on the side of the sheet of the layer being opposite to the uppermost point of the protrusion minus the sheet material thickness s.

Furthermore, it is preferred that for at least one, some or each of the protrusions the sum of the sheet material thickness s plus the height of the protrusion is 50 to 100% and preferably of 80 to 100% of the grid thickness g.

In a further development of the idea of the present invention, it is suggested that at least one, some or each of the protrusions has/have a base area of 0.25 to 25 mm$^2$ and preferably of 1 to 10 mm$^2$. Base area means the area of the sheet of the respective layer, which is covered by the bottom portion of the protrusion.

In accordance with a further preferred embodiment of the present invention, that at least one, some or each of the protrusions comprise(s) an edge, which has in the horizontal direction a maximum dimension over preferably at least 50%, more preferably at least 70%, even more preferably at least 90%, still more preferably at least 100%, yet more preferably at least 120% and most preferably at least 140% of the width b of adjacent separating elements.

Preferably, at least 80% of all openings of structured cross-channel packing element of the structured cross-channel packing element, which have an opening area of at least 2 mm$^2$, have essentially the same opening area. In other words, except for potentially present small openings having an opening area of less than 2 mm$^2$, the opening area of the openings are essentially the same. Essentially the same opening area means that the opening area of each opening is 60 to 140% of the average opening area of all openings of the at least one layer. The opening area of an opening may be measured for instance by laser scanning.

In addition, it is preferred that the ratio between the average width b of at least one, preferably of at least 50% and most preferably of each of the separating elements and the sheet material thickness s of the same layer is at least 5, preferably at least 10, more preferably at least 15 and most preferably at least 25. Preferably, the ratio between the average width b of at least 75%, more preferably of at least 80%, still more preferably of at least 90%, yet more preferably of least 95% and most preferably of all of the separating elements and the sheet material thickness of the same layer is at least 15 and more preferably at least 20.

In a further development of the idea of the present invention, it is proposed that at least one, preferably some and most preferably all of the at least two layers is/are obtainable or more preferably is obtained by a method comprising the steps of cutting and stretching a thin metal plate and then deforming the expanded metal sheet to a corrugated sheet, wherein the ratio between the distance $u_1$ between two openings being in the direction perpendicular to the stretch direction of the expanded metal sheet adjacent to a separating element and the average width b of this separating element is for at least 50% of all separating elements 1 to 10. In this connection, the stretch direction of the expanded metal sheet is the direction being perpendicular to the longitudinal direction of the structured cross-channel packing element. The distance $u_1$ is measured by determining the distance between the outermost point of one side of the edge of an opening in the direction perpendicular to the stretch direction of the expanded metal sheet and the outermost point of the same side of the edge of an adjacent opening in the same direction of the expanded metal sheet, wherein the longitudinal direction of the structured cross-channel packing element is as defined above. Furthermore, the average width b of a separating element is determined by dividing up the separating element into individual sections i=1, 2, 3 ... n each having a section length di, wherein for each of the sections the shortest distance bi between the adjacent edges within the sections is measured and the sum of the products di·bi is divided by the sum of di to yield the average width b of the separating element. Good results are in particular obtained, when the ratio between the distance $u_1$ and the average width b of at least 75%, more preferably of at least 80%, still more preferably of at least 90%, yet more preferably of at least 95% and most preferably of all separating elements is 3 to 6 and more preferably 3 to 5.

In accordance with a further preferred embodiment of the present invention, the distance $u_1$ is for at least 50%, more preferably for at least 75%, even more preferably for at least 80%, still more preferably for at least 90%, yet more preferably for at least 95% and most preferably for all openings 5 to 20 mm. More preferably, the distance $u_1$ is preferably for at least 50%, more preferably for at least 75%, even more preferably for at least 80%, still more preferably for at least 90%, yet more preferably for at least 95% and most preferably for all openings 7.5 to 15 mm and most preferably 8 to 12 mm.

Moreover, it is preferred in the aforementioned embodiment, in which at least one, preferably some and most preferably all of the at least two layers is/are obtainable or more preferably is obtained by a method comprising the steps of cutting and stretching a thin metal plate and then deforming the expanded metal sheet to a corrugated sheet, that the ratio between the distance $u_2$ between a first opening and a second opening being in the stretch direction of the expanded metal sheet adjacent to each other and the distance $u_1$ between the first opening and a third opening being in the direction perpendicular to the stretch direction of the expanded metal sheet adjacent to each other is 0.1 to 5, preferably 0.3 to 1 and more preferably 0.4 to 0.8. The distance $u_2$ is measured by determining the distance between the outermost point of a side of the edge of the first opening in the stretch direction of the expanded metal sheet and the outermost point of the same side of the edge of the adjacent second opening being adjacent in the stretch direction of the expanded metal sheet, wherein the distance is measured by determining the distance between the outermost point of one side of the edge of the first opening in the direction perpendicular to the stretch direction of the expanded metal sheet and the outermost point of the same side of the edge of the adjacent third opening in the same direction of the expanded metal sheet. Good results are in particular obtained, when for at least 50%, more preferably for at least 75%, even more preferably for at least 80%, still more preferably for at least 90%, yet more preferably for at least 95% and most preferably for all openings the ratio between the distance $u_2$ and the distance $u_1$ is 0.1 to 5, more preferably 0.3 to 10 and most preferably 0.4 to 0.8.

In addition, it is preferred that the distance $u_2$ is for at least 50%, preferably for at least 75%, more preferably for at least 80%, still more preferably for at least 90%, yet more preferably for at least 95% and most preferably for all openings 1.5 to 35 mm, more preferably 2 to 15 mm and most preferably 4 to 8 mm.

In order to achieve an optimal spreading of the heavy phase on the layer surface, it is preferred that the average width b of at least 50%, preferably of at least 75%, more preferably of at least 80%, still more preferably of at least 90%, yet more preferably of at least 95% and most preferably of all separating elements between adjacent openings is 1 to 10 mm. More preferably, the average width b of at least 50%, preferably of at least 75%, more preferably of at least 80%, still more preferably of at least 90%, yet more preferably of at least 95% and most preferably of all separating elements between adjacent openings is 1.5 to 5 mm and most preferably 1.8 to 3.5 mm.

In accordance with a further preferred embodiment of the present invention, for at least one layer the ratio of the total area of the openings in the layer divided by the sheet area of the layer, i.e. the void fraction of the layer, is between 5 and 40%. The sheet area As of a layer is according to the present invention the sum of the physical area of all of the separating elements measured only on one side and the total area of the openings enclosed by the separating elements. The total area of the openings is just the sum of the (cross-sectional) areas A of the openings. Furthermore, the sheet area As of a structured cross-channel packing element is the sum of the sheet areas of the layers included in the structured cross-channel packing element. Good results are in particular obtained, when for at least 50%, preferably for at least 75%, more preferably for at least 80%, still more preferably for at least 90% and yet more preferably for at least 95% of the at least two layers the ratio of the total area of the openings divided by the sheet area As of the layer is between 5 and 40%, preferably between 10 and 35%, even more preferably between 15 and 30% and most preferably between 18 and 25%.

The present invention is not particularly limited concerning the material of the sheets forming the layers of the structured cross-channel packing element. Good results are in particular obtained, when the sheets are made of a metal, a metal alloy, such as a compound selected from the group consisting of aluminum, copper, titanium, zirconium and alloys, a non-metal, such as plastic, carbon fiber reinforced plastic, ceramic, glass, hard material, concrete or rubber. More preferably, the sheets are made of stainless steel.

In accordance with the present invention, the packing element is a structured cross-channel packing element. Accordingly, it is preferred that at least 50%, preferably at least 75%, more preferably at least 80%, still more preferably at least 90%, yet more preferably at least 95% and most preferably all of the at least two layers comprise periodic deformations, wherein the layers are oriented such that the periodic deformations of the adjacent layers intersect in crisscross fashion with the periodic deformations of the layers extending obliquely relative to the longitudinal direction V. At least 50%, preferably at least 75%, more preferably at least 80%, still more preferably at least 90%, yet more preferably at least 95% and most preferably each of the layers contact(s) each of the adjacent layers at points of intersection between the periodic deformations of the layer and those of the adjacent layers and wherein the open space between the at least two layers is defined by the periodic deformations. Preferably, the distance between the uppermost points of two adjacent periodic deformations of a layer is, depending on the surface area, between 10 and 25 mm and more preferably between 13 and 23 mm.

For instance, the periodic deformations may be corrugations comprising a plurality of alternately oriented peaks and valleys, wherein the peaks of a layer contact the valleys of an adjacent layer and the valleys of a layer contact the peaks of an adjacent layer, wherein adjacent layers are oriented such that the peaks and valleys of the adjacent layers intersect in crisscross fashion with the peaks and valleys of the layers extending obliquely relative to the longitudinal direction. Therefore, it is preferred that at least 50%, preferably at least 75%, more preferably at least 80%, still more preferably at least 90%, yet more preferably at least 95% and most preferably all of the at least two layers comprise periodic deformations, wherein the periodic deformations of the cross-package element are corrugations comprising a plurality of alternately oriented peaks and valleys, wherein the peaks of a layer contact the valleys of an adjacent layer and the valleys of a layer contact the peaks of an adjacent layer, wherein adjacent layers are oriented such that the peaks and valleys of the adjacent layers intersect in crisscross fashion with the peaks and valleys of the layers extending obliquely relative to the longitudinal direction. Of course, it is also possible that not all peaks of a layer contact one or more valleys of an adjacent layer, but that rather a part of the peaks of a layer contact one or more valleys of an adjacent layer and vice versa. However, between two adjacent layers at least three touching points should be present. Preferably at 30 to 90% and more preferably at 50 to 80% of the locations, where peaks and valleys of adjacent layers are opposite of each other, no touching contact is present, wherein at the remaining locations the respective peaks and valleys of adjacent layers touch each other.

Good results are in particular obtained in this embodiment, when the angle $\alpha$ between each of the peaks and each of the valleys with respect to the longitudinal direction is 10° to 60°, preferably 20° to 50° and most preferably 25° to 47°, wherein the peaks and valleys of adjacent layers are preferably oriented in opposing directions. This allows a uniform distribution of the light phase over at least one direction of the cross-section the structured cross-channel packing element. The angles should not be too large to minimize pressure drop and maximize capacity.

In order to reduce the pressure loss of the structured cross-channel packing element, it is proposed in a further development of the idea of the present invention that the peaks and valleys are bended in the terminal portions of the layers in relation to the peaks and valleys of the central portion being arranged between the terminal portions so that the flow resistance in the terminal zones of the structured cross-channel packing element is reduced with respect to that of the zone arranged between the terminal zones. Accordingly, the peaks and valleys of the layers of this embodiment do not extend linearly. Preferably, the peaks and valleys are bended in the terminal portions of the layers so as to extend at least essentially vertically. Essentially vertical means that the peaks and valleys are not inclined at the lower and upper edges of the layers more than 10°; preferably not more than 5° and more preferably not more than 2° to the vertical direction. The terminal zones are the uppermost and the lowermost zones of the layers extending from the upper and lower edges of the layers 30%, preferably 25% and more preferably 20% or less along the sheet length, which is the direction along the longitudinal direction of the layer. Each of the terminal zones may have peaks and valleys with a different height than those of the central zone, which is the zone of the layer between the two terminal zones. Instead of providing such bends or different heights in both terminal zones, they may only be present in one of the terminal zones.

In accordance with an alternative embodiment of the present invention, the periodic deformations are waves having a square, a triangular, a sinusoidal or a meander-type cross-section comprising peaks and valleys, wherein the peaks of a layer contact the valleys of an adjacent layer, and the valleys of a layer contact the peaks of another adjacent layer, wherein adjacent layers are oriented such that the peaks and valleys of the adjacent layers intersect in crisscross fashion with the peaks and valleys of the layers extending obliquely relative to the longitudinal direction.

Good results are in particular obtained in this embodiment, when the angle $\alpha$ between each of the peaks and each of valleys with respect to the longitudinal direction is 10° to 60°, preferably 15° to 55° and most preferably 20° to 50°, wherein the peaks and valleys of adjacent layers are preferably oriented in opposing directions. This allows a uniform distribution of the light phase over at least one direction of the cross-section of the structured cross-channel packing element.

The present invention is not particularly limited concerning the number of layers contained in the structured cross-channel packing element. The number of layers in a packing element depends on the diameter of the mass transfer column and the required specific area for the mass transfer. The more surface is required, i.e. the higher the specific area, the more layers will be present. Although the structured cross-channel packing element is generally of cylindrical shape with a round cross-section, there may also be cross-sections of other shapes, e.g. rectangular ones, depending on the shape of the heat and/or mass transfer column. If the column has a large diameter, the element is commonly subdivided into segments or tiles to reduce weight and to allow piece-wise installation.

Particular good combinations of mass transfer efficiency and capacity are obtained, when the structured cross-channel packing element according to the present invention has a specific area of 100 to 1,400 $m^2/m^3$ and preferably of 200 to 900 $m^2/m^3$.

In a further development of the idea of the present invention, it is proposed that the structured cross-channel packing element has a height of 100 to 350 mm and preferably of 150 to 250 mm.

In accordance with a further aspect, the present invention relates to a mass transfer column comprising at least one structured cross-channel packing element as described above.

Preferably, the mass transfer column comprises 1 to 10, more preferably 2 to 8 and most preferably 2 to 4 beds, wherein each bed comprises at least one structured cross-channel packing element as described above. Preferably, one bed comprises 2 to 20, more preferably 4 to 15 and most preferably 6 to 10 structured cross-channel packing elements. In order to achieve a very good gas distribution in the bed, two adjacent structured cross-channel packing elements are rotated along the axis of the column that is generally parallel to the longitudinal direction. The angle of rotation is around 50 to 120°, more preferably 70° to 110° and most preferably 80° to 100°.

In addition, it is preferred that the mass transfer column comprises a distributor above each of the beds of structured cross-channel packing elements so as to allow to at least essentially homogenously distribute the heavy phase during the operation of the mass transfer column over the cross-section of the structured cross-channel packing element bed.

In accordance with a further preferred embodiment of the present invention, it is proposed that the mass transfer column comprises below the bottom of each bed of structured cross-channel packing element a collector, which allows to collect the heavy phase trickling down the surfaces of the layers of the structured cross-channel packing elements during the operation of the mass transfer column.

In accordance with still a further aspect, the present invention relates to the use of an aforementioned structured cross-channel packing element for the mass transfer and/or heat exchange.

Specific embodiments in accordance with the present invention are subsequently described with reference to the appended drawings and by examples.

Fig. 1     is a schematic side view of a mass transfer column including several structured cross-channel packing elements according to one embodiment of the present invention.

Fig. 2a     is an explosion view of a part of the sheets of a structured crosschannel packing element according to one embodiment of the present invention.

Fig. 2b     is a schematic side view of the structured cross-channel packing element shown in figure 2a.

Fig. 2c     shows two layers of the structured cross-channel packing element shown in figure 2a.

Fig. 3     is a fragmentary view of a structured cross-channel packing element according to another embodiment of the present invention.

Fig. 4     is a schematic view of an embodiment of the sheet of a layer of the structured cross-channel packing element according one embodiment of the present invention.

Fig. 5     is a schematic view of an embodiment of the sheet of a layer of the structured cross-channel packing element according another embodiment of the present invention.

Fig. 6     illustrates the determination of the least deformed portion of a structured cross-channel packing element made of layers of corrugated sheets.

Fig. 7a     is a schematic top view of an expanded metal sheet of a layer of a structured cross-channel packing element according to another example of the present invention.

Fig. 7b     is a schematic perspective view of the expanded metal sheet formed as corrugated sheet of a structured cross-channel packing element of fig. 7a.

Fig. 7c     is a schematic sectional view of the expanded metal sheet formed as corrugated sheet of a structured cross-channel packing element of fig. 7b.

Fig. 8a-b     show the results obtained in example 1 and comparative examples 1 and 2.

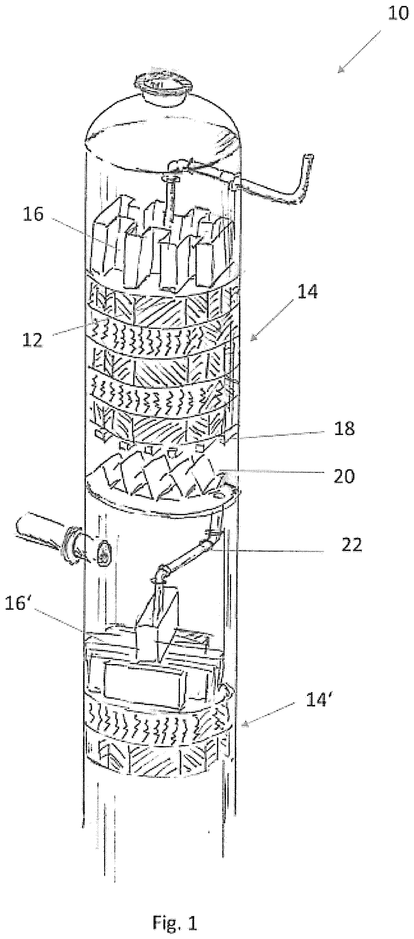

Figure 1 shows is a schematic side view of a mass transfer column 10 and more specifically a distillation column 10 according to one embodiment of the present invention (the transparent inside of the figure is only for illustrative purposes). The distillation column 10 comprises a plurality of structured cross-channel packing elements 12, which are arranged in form of two beds 14, 14'. Above each of the two beds 14, 14' a distributor 16, 16' is arranged to evenly distribute the liquid over the cross-section of the bed, while leaving enough space for the vapor to ascend through it. Below each bed 14, 14' a grid-like holding device 18 and a collector 20 are arranged, wherein the grid-like holding device 18 keeps the bed 14 at its position and the collector 20 collects the liquid trickling down from the bed 14, while sufficient open space is left in the collector for the vapor to ascend. For illustrative purposes, the openings and separating elements of the layers of the structured cross-channel packing elements are not shown in figure 1.

During the operation of the distillation column 10, gas ascends as light phase from the bottom to top, whereas liquid as heavy phase descends in counter-current from the top to the bottom of the distillation column 10. More specifically, the liquid is essentially homogenously distributed by the distributor 16 over the cross-section of the bed 14 and trickles down along the surfaces of the layers of the structured cross-channel packing elements 12. Between the different layers of the structured cross-channel packing elements 12 open spaces are provided, which are filled with the gas and provide a path for the gas to ascend, while it is driven by a pressure gradient. By allowing the liquid to spread on the surface of the layers of the structured cross-channel packing elements 12, a large interface is created between the two phases so that an efficient heat and mass transfer between the liquid and the gas is established at the interface. At the bottom of the bed 14, the liquid is collected in the collector 20 and guided via the pipe 22 down to the distributor 16' above the second bed 14'.

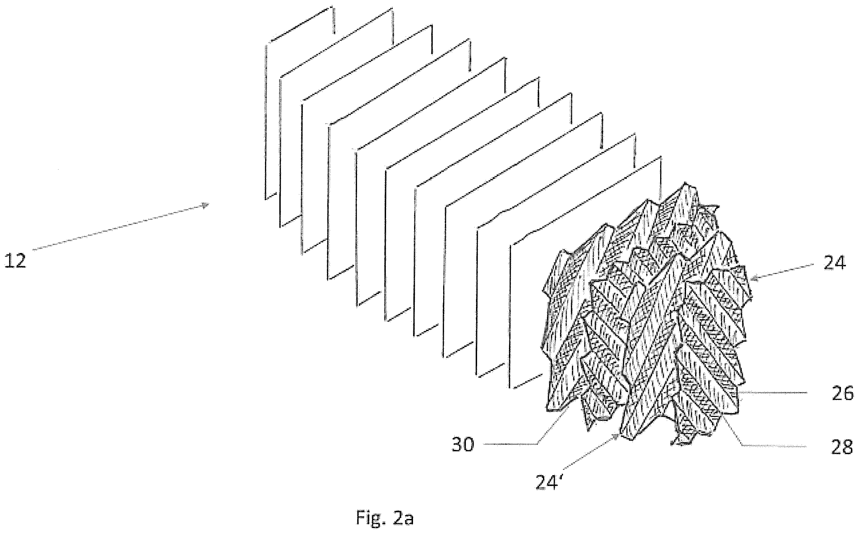

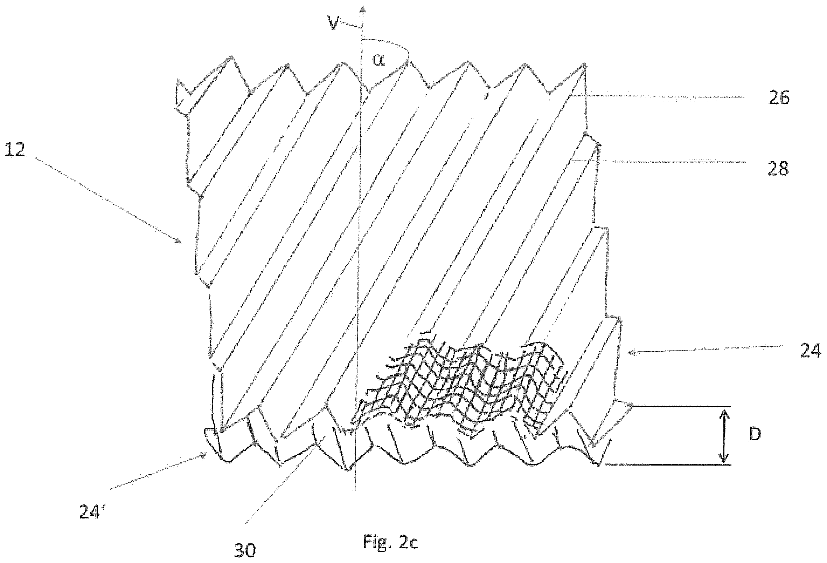

Figures 2a to 2c show a structured cross-channel packing element 12 of the so-called cross-channel corrugated sheet packing type. For illustrative purposes, the openings and separating elements of the layers of the structured cross-channel packing element are not shown in figures 2a to 2c. The structured cross-channel packing element 12 is assembled from a plurality of corrugated sheets 24, 24', which are parallel and in touching contact with each other. Each of the corrugated sheets 24, 24' comprises openings and separating elements as described. At the bottom right of figure 2c the sheet structure comprising openings and separating elements of a part of the corrugated sheet 24 is schematically indicated. As it is understood from the above specification, indeed all of the corrugated sheets 24, 24' consists of such structures, which is not shown in figures 2a to 2c only for illustrative reasons. In the present embodiment, the corrugated sheets 24, 24' are made of expanded sheet material, i.e. they are prepared by cutting and stretching a thin metal plate and then deforming the expanded sheet metal to corrugated sheets 24, 24'.

The corrugated metal sheets 24, 24' are fixed with each other by means of several rods (not shown) penetrating the corrugated sheets 24, 24' perpendicular to the longitudinal section of the corrugated sheets 24, 24', wherein the rods are fixed with the first and last corrugated sheet by means of a washer and a nut or by bending the rods or by any other means (not shown). Each corrugated sheet 24, 24' comprises a plurality of alternately oriented peaks 26 and valleys 28, wherein adjacent corrugated sheets 24, 24' are oriented such that the corrugations 26, 28 of the adjacent corrugated sheets 24, 24' intersect in crisscross fashion with the corrugations 26, 28 of the corrugated sheets 24, 24' extending obliquely relative to the longitudinal direction, thus forming inclined channels 30 which continuously cross one another. More specifically, angle $\alpha$ between each of the peaks 26 and each of the valleys 28 with respect to the longitudinal direction V is 10° to 60°, preferably 20° to 50° and most preferably 25° to 47°, wherein the peaks 26 and valleys 28 of adjacent layers 32, 32' or 24, 24', respectively, are oriented in opposing directions. The channels 30 define a maximum distance D between adjacent corrugated sheets 24, 24', such as for example of 20 mm. These channels 30 positively influence the flows of the gas phase and of the liquid phase within the structured packing cross-channel element 12 and facilitate the mass transfer between the phases. That is, the gas phase and liquid phase are brought into contact in the channels 30 of the structured cross-channel packing element 12 and the mass transfer as well as the heat transfer between the phases is thus facilitated. More specifically, ascending gas comes into contact with liquid, which is present on the surface of the corrugated sheets 24, 24' defining the channels 30, when it flows downwardly through the mass transfer column. All in all, the light phase flows through the open space or channels 30, respectively, without a bypass flow through the openings 40 of the sheet of the layers 32, 32' of the structured cross-channel packing element 12. This leads to a particular efficient mass and energy transfer between the light and heavy phases. Moreover, the crisscross fashion of the channels 30 leads to an optimal distribution of the phases from left to right.

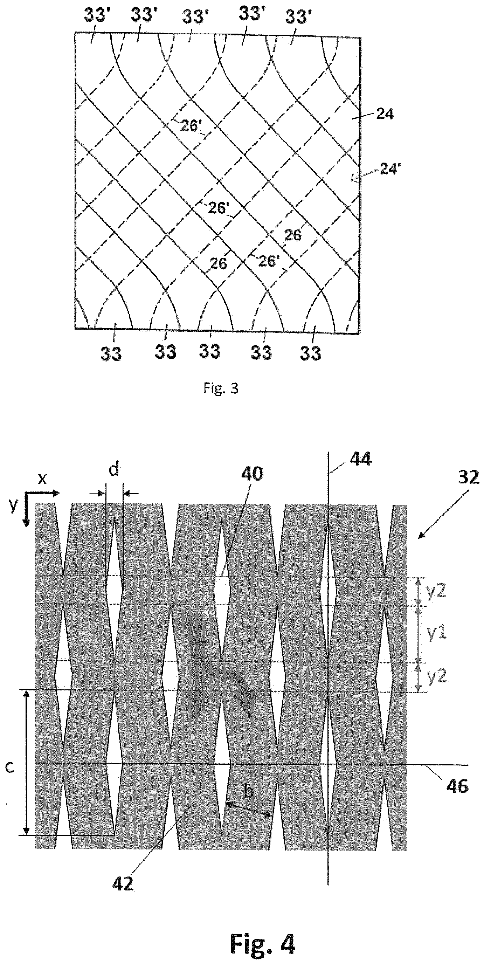

Figure 3 shows a fragmentary view of a structured cross-channel packing element in accordance with an alternative embodiment. The structured cross-channel packing element of figure 3 is similar to that shown in Figures 2a to 2c except that corrugated sheets 24, 24' do not comprise linear extending peaks and valleys, but that the peaks 26, 26' and valleys of the corrugated sheets 24, 24' are bended in the terminal portions 33, 33' so as to extend in the terminal portions 33, 33' of the corrugated sheets 24, 24' essentially in the vertical direction. In Figure 3, the solid lines depict the peaks 26 of the corrugations in the face of the corrugated sheet 24 presented to the viewer, while the broken lines 26' depict the peaks of the corrugations in the corresponding face of the corrugated sheet 24' immediately behind the one in view. By bending the terminal portions or zones 33, 33', respectively, so as to extend in the terminal portions 33, 33' of the corrugated sheets 24, 24' essentially in the vertical direction, the flow resistance of the terminal portions 33, 33' of the corrugated sheets 24, 24' is reduced compared to the flow resistance of the portions being located between the terminal portions 33, 33' of the corrugated sheets 24, 24'. This leads to a reduced pressure loss of the structured cross-channel packing element. The terminal zones are the uppermost and the lowermost zones 33, 33' of the corrugated sheets 24, 24' extending from the upper and lower edges of the corrugated sheets 24, 24' 30%, preferably 25% and more preferably 20% or less along the length of the corrugated sheets 24, 24', which is the direction along the longitudinal direction of the corrugated sheets 24, 24'. Each of the terminal zones 33, 33' may have peaks 26, 26' and valleys with a different height than those of the central zone, which is the zone of the layer between the two terminal zones 33, 33'. Such features as the different height or the bend may be present in both terminal zones 33, 33' of the corrugated sheets 24, 24' only.

Figure 4 is a schematic view of an embodiment of the sheet of a layer 32 of the structured cross-channel packing element 12 according to the present invention, which are for instance suitable to be used in a structured cross-channel packing element 12 as shown in any of figures 2a to 2c and 3. The corrugated sheet 24, 24' is obtained by deforming or corrugating the sheet of the layer 32. The sheet of the layer 32 of the structured cross-channel packing element 12 shown in figure 4 comprises openings 40 with a rhombic cross-section, wherein the openings 40 are surrounded and separated from each other by separating elements 42. The separating elements 42 are thin strips with an average width b of, for example, 2 mm, wherein the separating elements 42 completely surround the openings 40. The sheet is simply produced of an expanded metal, i.e. by cutting and stretching a thin metal plate and then deforming the expanded sheet metal to the desired form, i.e. to a corrugated sheet. More specifically, all openings 40 of the layer 32 are arranged in several adjacent vertical rows 44 and in several adjacent horizontal rows 46. In each horizontal row 46 a line being parallel to the longitudinal direction crosses the openings 40 through each a position at which the width of the respective opening 40 is maximal, i.e. at the maximal width d of the respective opening 40, whereas in each vertical row 44 a line being parallel to the longitudinal direction crosses the openings 40 through each a position at which the length of the respective opening is maximal, i.e. at the maximal length c of the respective opening 40. Accordingly, all openings 40 in the sheet of the layer 32 overlap with each other so that each cross-sectional plane of the layer 32 comprises a plurality of openings 40. Thereby, the liquid is forced through the plurality of separating elements 42 being arranged between adjacent openings 40 leading to an excellent distribution of the liquid over the whole surface of the sheet of the respective layer of the structured cross-channel packing element, as schematically shown by the arrows in figure 4. All of the openings 40 of a horizontal row 46 of the layer 32 have the same maximal width d and the same maximal length c. In addition, all of the segments Y2 of the layer 32, which extend in the longitudinal direction of the structured cross-channel packing element between a first line touching, seen in the longitudinal direction from top to bottom, the lowermost points of the openings 40 of a first horizontal row 46 and a second line touching the uppermost points of the respective openings 40 of a second horizontal row 46 comprising openings 40 being located in the same vertical row 44 below and adjacent to the openings 40 of the first horizontal row 46 and which extend in the direction being perpendicular to the longitudinal direction of the structured cross-channel packing element from one end to the opposite end of the layer 32, comprise less openings than the segments Y1 being comprised between two adjacent segments Y2. Thereby, it is achieved that some areas, namely the segments Y1, of the layer 32 of the structured cross-channel packing element 12 comprise more openings 40 than other areas, namely the segments Y2. In turn, this effects that liquid is led in the Y1 segments slightly oblique over the separating elements being provided between adjacent openings, which results in a transverse distribution, Moreover, the segments Y2 allow to divide the liquid onto two separating elements provided in the below Y1 segment, which significantly increases the wettability so that liquid flowing over the alternating Y1 and Y2 segments is periodically transversely distributed and mixed.

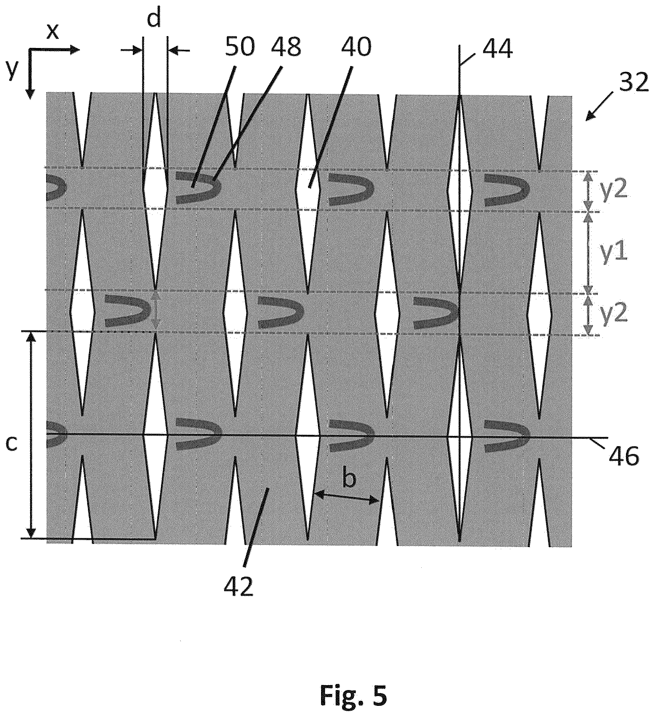

The sheet of a layer 32 of the structured cross-channel packing element 12 shown in figure 5 corresponds to that shown in figure 4 except that half of the separating elements 42 comprise each in the segments Y2 a protrusion 48. Each of the protrusions 48 has the form of a prism, wherein a dimple 50 is provided in the top area of the protrusion 48. The provision of the protrusions in the separating elements of the layer 32 of the structured cross-channel packing element 12 increases the effects of periodically transversely distributing and mixing the liquid flowing over the layer 32. More specifically, the protrusions 48 being provided on the separating elements 42 deflects the liquid flowing to an edge of the protrusion 48, as a consequence of which liquid is merged and mixed together in the segment Y1 of the separating element 42, which has due to the protrusion 48 a smaller area being available for the flow of liquid, since the area covered by the protrusion 48 does not allow the liquid, at least if present in form of a thin film, to flow over the protrusion 48 or, if the liquid is present in the form of a thicker film, only allows the upper portion of the liquid film to flow over the protrusion 48, but not the lower portion of the liquid film. Downwards from the protrusion 32, a larger area of the separating element 42 is available for the liquid flow so that the liquid spreads.

Figure 6 illustrates the determination of the least deformed portion of a structured cross-channel packing element made of corrugated sheets 24, 24' as layers 32, 32'. As set out above, in preferred embodiments of the present invention, the layers 32, 32' of the structured cross-channel packing element 12 are made of expanded sheet metal, i.e. by cutting and stretching a thin metal plate and then deforming the expanded sheet metal to, for instance, corrugated sheets 24, 24'. After this processing, the openings and separating elements are likely to be distorted and/or stretched around the peaks 26 and the valleys 28 of the corrugations of the corrugated sheets 24, 24'. However, the inclined flanks, which are defined by the approximately straight portion of the sheet connecting the peaks 26 and the valleys 28, include openings and separating elements of almost unmodified sizes, because deformation is less pronounced there. It is therefore preferred according to the present invention to measure the dimensions only in the portion of the layer that is less deformed, which is designated a "least deformed portion" of the corrugated sheets 24, 24'. This "least deformed portion" is defined as follows: The corrugated sheet has an average layer width W. This average layer width is determined by the amplitude of the majority of the peaks 26 and valleys 28 of the layer 24. An upper and a lower plane represented by two dashed lines in the figure below are drawn to touch the majority of the peaks 26 and the valleys 28 of the layer. The distance between these two dashed lines is called average layer width W, and it is typically around half the maximum distance D. The value W is very often a constant value, but it may vary in the most general case as the two planes do not need to be parallel and a packing element may contain layers of different width. A third center plane 52 is defined, which is placed in such a way, that from each point on this center plane 52, the distance measured to the upper and the lower plane is identical. The least deformed portion of the corrugated sheet 24, which shall be considered when determining the characteristic dimensions of the sheet, is bordered by an upper and a lower limiting plane 54, 54', which is positioned at ±20%, more preferably ±30% and most preferably ±40% of W around the center plane 52. The openings and separating elements in this least deformed portion, i.e. the openings and separating elements found between these two limiting planes 54, 54', are analyzed when determining the parameters, such as average hydraulic diameter of the holes and average widths of the separating elements. According to one embodiment of the present patent application for at least 90% of the holes between the limiting planes the following is valid: Each opening with its surrounding system of separating elements shall have the same appearance and identical hydraulic diameter d. The surrounding separating elements shall on average have the same width b.

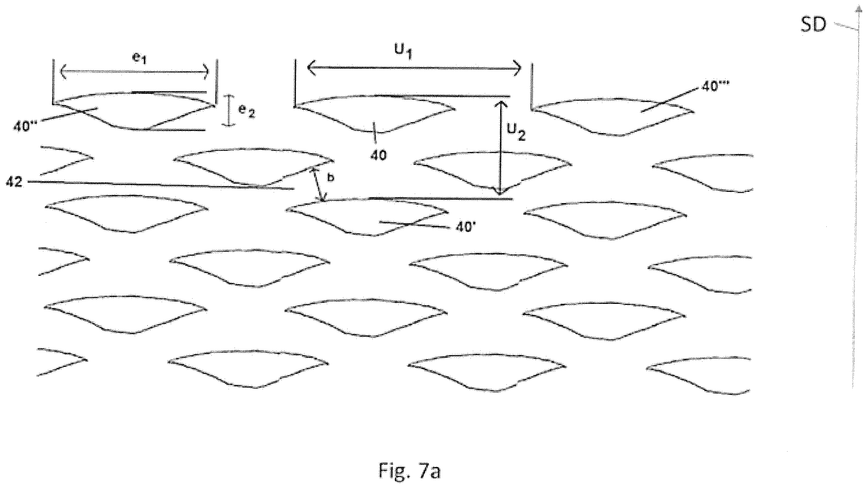

Fig. 7a is a schematic top view of an expanded metal sheet of a layer of a structured cross-channel packing element according to another example of the present invention. The top view has been made by taking a photographic picture of the expanded metal sheet after having flattened the corrugates sheet made of expanded metal by laying the corrugated expanded metal sheet on a flat surface, putting a plate on the top of the expanded metal sheet and then pressing a plate on the top of the corrugated expanded metal sheet downwards with a sufficiently low pressure so as to just flatten the corrugated sheet made of expanded metal, without changing the geometry and dimensions of the separating elements and openings. The expanded metal sheet comprises openings 40, 40', 40", 40''' having an essentially trapezoidal from, which are separated from each other by the separating elements 42. Accordingly, the openings 40, 40', 40" have a shorter characteristic length $e_2$ and a longer characteristic length $e_1$, wherein the shorter characteristic length $e_2$ of an opening 40, 40', 40" is the maximal dimension of the opening in the stretch direction SD of the expanded metal sheet and the longer characteristic length $e_1$ of an opening 40, 40', 40" is the maximal dimension of the opening in the direction perpendicular to the stretch direction SD of the expanded metal sheet. The stretch direction SD of the expanded metal sheet is that direction, along which the sheet metal has been stretched during the production of the expanded metal sheet. For instance, the longer characteristic length $e_1$ of the openings 40, 40', 40" is determined by measuring the distance between the outermost left point to the outermost right point of the edge of the opening 40" in the direction perpendicular to the stretch direction SD of the expanded metal sheet, whereas the shorter characteristic length $e_2$ of the openings 40, 40', 40" may be determined by measuring the distance between the uppermost point and the lowermost point of the edge of the opening 40. In order to particularly precisely determine the characteristic lengths $e_1$ and $e_2$, the respective dimensions may be measured for at least 5 different openings 40, 40', 40" and more preferably for at least 10 different openings 40, 40', 40" and by then dividing the sum of the measured values by five or ten, respectively. The distance $u_1$ between two openings 40, 40', 40''' being in the direction perpendicular to the stretch direction SD of the expanded metal sheet adjacent to each other and separated by a separating element 42 is determined by measuring the distance between the outermost point of a side of the edge of the opening 40 and the outermost point of the same side of the edge of the opening 40''' being adjacent in the direction perpendicular to the stretch direction SD of the expanded metal sheet. In figure 7a, the distance $u_1$ is determined by measuring the distance between the outermost point of the left side of the edge of the opening 40 and the outermost point of the left side of the edge of the opening 40''' being adjacent in the direction perpendicular to the stretch direction SD of the expanded metal sheet. In addition, the distance $u_2$ between two openings 40, 40' being in the stretch direction SD of the expanded metal sheet adjacent to each other and separated by separating element 42 is determined by measuring the distance between the outermost point of a side of the edge of the opening 40 in the stretch direction SD of the expanded metal sheet and the outermost point of the same side of the edge of the opening 40' being adjacent in the stretch direction SD of the expanded metal sheet. In figure 7a, the distance $u_2$ is determined by measuring the distance between the uppermost point of the upper side of the edge of the opening 40 in the stretch direction SD of the expanded metal sheet and the uppermost point of the upper side of the edge of the opening 40' being adjacent in the stretch direction SD of the expanded metal sheet. In order to particularly precisely determine the distance $u_1$, the distance $u_1$ may be determined by measuring the distance between the outermost point of one side of the edge of an opening 40 in the direction perpendicular to the stretch direction of the expanded metal sheet and the outermost point of the same side of the edge of the fifth or tenth adjacent opening in the same direction of the expanded metal sheet and by dividing the distance by four or nine, respectively. Likewise thereto, the distance $u_2$ may be determined by measuring the distance between the outermost point of a side of the edge of the opening 40 in the stretch direction of the expanded metal sheet and the outermost point of the same side of the edge of the fifth or tenth adjacent opening thereto arranged in the stretch direction of the expanded metal sheet and by dividing the distance by four or nine, respectively. Furthermore, expanded metal sheet can be characterized by means of the stretching factor, which is defined as $f_s = u_2/2b$.

Fig. 7b and 7c are a schematic perspective view and a schematic sectional view of the expanded metal sheet formed as a corrugated sheet 24, 24' of a structured cross-channel packing element of fig. 7a before having been flattened. As shown in these figures, the expanded metal sheet resulting from the production process, i.e. by cutting and stretching a metal plate, is not flat anymore. This is the result of deformation, distortion, bending or vaulting of individual separating elements and a relative deformation of separating elements compared to others, e.g. by tilting. Other features like burrs may have resulted from a punching process and therefore contribute to the thickness. The resulting dimension of the expanded metal sheet is the aforementioned grid thickness g, which has been defined above as the distance between a plane touching the outermost points of one of the two surfaces and a plane touching the outermost points of the opposite surface of the layer. The grid thickness g is preferably measured and determined as average grid thickness g with a micrometer screw at measuring points 56, 56' being located in the least deformed portions of the layer being described above in connection with figure 6. The grid thickness g may be identical to the sheet material thickness s, which is the case, if the expanded sheet is flat, because it has been flattened by rolling, or up to 5.0 times larger than the sheet material thickness s. The sheet material thickness s is preferably measured with a micrometer screw at measuring points 58, 58' being located in the least deformed portions of the layer. As shown in figure 7b, the grid thickness g does not comprise the corrugations and is thus different from the average layer width W of the layer or a corrugated sheet, respectively, as shown in figure 6.

Subsequently, the present invention is described by means of illustrative, but not limiting examples.

**Example 1 and Comparative Examples 1 and 2**

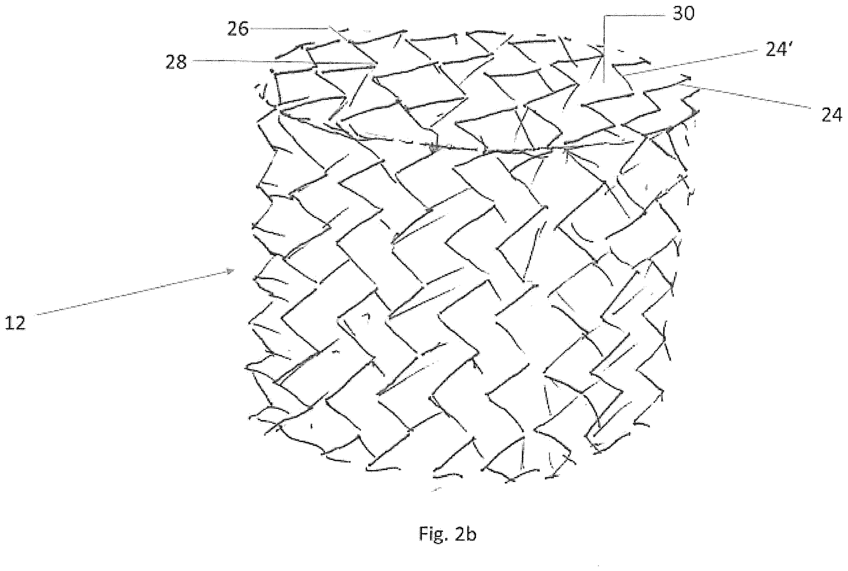

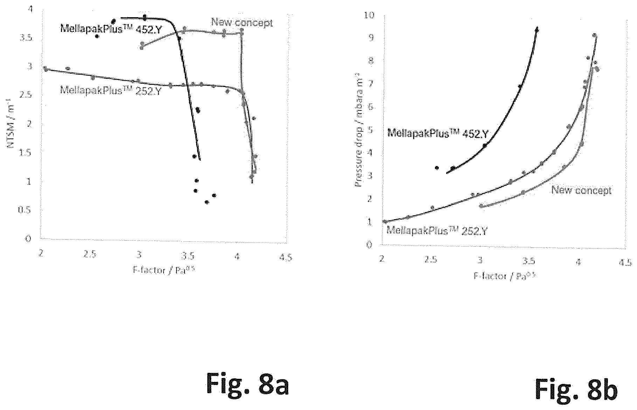

A structured cross-channel packing element in accordance with the present invention being embodied as shown in figure 2 were tested in comparison to prior art structured cross-channel packing elements, wherein the obtained results are shown in figures 8a and 8b. The commonly known standard procedure determines the pressure drop over the packing bed and the mass transfer efficiency using a binary mixture under total reflux condition. The binary standard test mixture used in the example and comparative examples 1 and 2 was ortho- and para-xylene. This standard close-boiling ideal binary mixture to assess the performance of distillation equipment is specified in U. Onken, W. Arlt: "Recommended Test Mixtures for Distillation Columns", 2nd Ed. 1990, The Institution of Chemical Engineers, Rugby, England. ISBN 0-85295-248-1.

The bottom of a distillation column was filled with a sufficient amount of the binary mixture to maintain a decent liquid level during operation of the column. The reboiler was started, a part of the liquid mixture was continuously vaporized, and the vapor rose towards the head of the column. The flow rate of the vapor can be expressed in terms of the f-factor and is commonly determined indirectly via the energy balance at the reboiler or at the condenser. The condenser cooled the vapor such that it condensed back to liquid. Under the preferred total reflux conditions, the entire amount of liquid was sent back to the top of the packing bed, where it was distributed by means of a distributor. The distributor is typically a device comprising channels that receive the liquid and provide an evenly spaced set of orifices through which the liquid can trickle down onto the top packing of the structured packing bed. After trickling through the structured packing bed, the entire amount of liquid was collected at the bottom of the structured packing bed by means of a collector from where it was sent back to the bottom of the column. At the bottom the liquid joined the liquid pool from which it was vaporized again. A constant head pressure p was established by controlling the cooling duty of the condenser in combination with a vacuum pump to remove surplus inert gases.

After a certain time of operation at constant reboiler duty a steady state condition was achieved. At this point, the pressure drop over the packing bed and temperatures at relevant points along the column were read, and top and bottom samples of the mixture were taken from the distributor at the top of the packing bed and from the collector at the lower end of the packing bed.

Several operating points were measured by varying the heat (and cooling) duty, which affects the f-factor (vapor flow) and the related liquid flow through the packing bed while the head pressure was kept unchanged. The same experiment was repeated for several settings of the head pressure.

The compositions of the samples were analyzed by means of a calibrated gas chromatograph. The top and bottom samples varied by the amount of low-boiler they contain. More low-boiler, i.e. the compound with the lower boiling temperature, was found in the top sample than in the bottom sample. Once the binary compositions were known, the equation according to Fenske (M. R. Fenske, Ind. Engng. Chem. 24, p. 482, 1932) was applied to determine the number of Theoretical Stages per Meter (NTSM). Sometimes, the inverse value HETP is used, which is called Height Equivalent to a Theoretical Plate.

$$HETP = 1 / NTSM$$

A high NTSM (or a low HETP) means a good mass transfer efficiency.

The f-factor is defined by:

$$f\text{-factor} = v_G \cdot \sqrt{\rho_G}$$

wherein $v_G$ is the average velocity of the rising vapor, which can be determined from the mass flow rate via an energy balance at the reboiler. The second variable $\rho_G$ is the vapor density at the relevant vapor/liquid equilibrium. Due to the change in pressure and temperature along the column the vapor density and other physical properties of the fluids varied along the column, but the relevant information is available for the binary mixture. Such variations require to select an appropriate definition of the f-factor. It may be determined by means of the properties valid under the conditions at the top or at the bottom of the packing bed. Alternatively, an average value may be computed taking into account the variation over the entire bed. For comparison purpose any of the possible approaches works, provided the same approach is used for all tests.

A high f-factor means a high mass flow rate in the column. The value of the f-factor that is achievable is usually limited by the flooding which determines the capacity of packing and internals. Sometimes the capacity factor c is used instead of the f-factor, which is obtained by dividing the f-factor by the square root of the density difference of the liquid and the vapor.

The pressure drop over the packing bed and internals was another relevant result of the experiment. It was obtained as the difference of the pressure readings at the top above the distributor and at the bottom below the collectors after dividing by the bed height $H_B$:

$$\Delta P / \Delta z = ( \rho_{top} - \rho_{bottom} ) / H_B$$

Three kinds of structured packing elements 12 were used in the examples and comparative examples. While the structured packing elements "New concept" were cross-channel corrugated sheet packings made of layers according to the present invention, the structured packing elements "MellapakPlus 252.Y" and "Mellapak-Plus 452.Y" were structured packing elements not in accordance with the present invention. More specifically, the structured packing elements "MellapakPlus 252.Y" and "MellapakPlus 452.Y" are known standard cross-channel corrugated sheet packings with punched holes (leading to approximately 10% void fraction of the layers) and surface texturing as described in GB 1,569,828 and in US 4,981,621, which are commercially distributed under the respective names. In the case shown in Figure 8a and 8b, the "New concept" cross-channel corrugated sheet packings had a specific surface of around 400 $m^2/m^3$ and the structure is otherwise similar to the commercial "MellapakPlus 452.Y" structure, except for the microstructure described in this patent. The microstructure used had a grid thickness g around 0.2 mm, the protrusion base area was around 4 $mm^2$ and had a height of approximately 0.1 mm. The microstructure of the "MellapakPlus 252.Y" and "MellapakPlus 452.Y" used had a grid thickness g around 1.3 mm. All structured packing elements had a height of around 200 mm. The material thickness s of all packings was 0.1 mm. Figure 2 shows the principle of the set-up used. Despite the replacement of the packings, the same state of the art distributor type 16 and the same state of the art collector type 20 were used. The gas inlet was 2 meters below the packing support grid 18 without an additional inlet device, whereby two half-height M250X were installed below the collector. The collector consists of a ring channel and the collecting vanes are fixed to ring channel. The packings are each installed on the support grid with a 90 degree offset to each other and the liquid distributor is hung and levelled above the uppermost packing element. A channel distributor with a distributor density of more than 70 drip points per m2 was used. All packings were tested in a distillation column with 1.2 m inner diameter at total reflux using ortho- and para-xylene at a head pressure of p=100 mbar.

The obtained efficiency curves are shown in Figure 8a. Figure 8b shows the pressure drops over the entire bed. It is remarkable and surprising that the packing with the new microstructure according to the present invention shows significantly better overall performance in comparison to the prior art packings. The packing with the new microstructure according to the invention has the efficiency of a MellapakPlus 452.Y and 20% more capacity. The packing with the new microstructure according to the invention shows almost the same capacity and pressure drop of a MellapakPlus 252.Y and 40 % more separation efficiency.

## List of Reference Numerals and Abbreviations

| | |
|---|---|
| 10 | Mass transfer column / distillation column |
| 12 | Structured cross-channel packing element |
| 14, 14' | Beds of structured cross-channel packing elements |
| 16, 16' | Distributor |
| 18 | Holding device |
| 20 | Collector |
| 22 | Pipe |
| 24, 24' | Corrugated sheets |
| 26 | Peak of a layer |
| 26' | Peak of an adjacent layer |
| 28 | Valley |
| 30 | Channel / open space |
| 32, 32' | Layers |
| 33, 33' | Terminal portions of a corrugated sheet |
| 40, 40', 40", 40''' | Opening of the grid |
| 42 | Separating element of the grid |
| 44 | Vertical row of openings |
| 46 | Horizontal row of openings |
| 48 | Protrusion |
| 50 | Dimple |
| 52 | Center plane |
| 54, 54' | Upper and lower limiting planes determining the least deformed portion of a structured cross-channel packing element made of corrugated sheets |
| 56, 56' | Measuring point for determining the grid thickness g |
| 58, 58' | Measuring point for determining the sheet material thickness s |

| | |
|---|---|
| b | Average width of the separating elements |
| c | Maximal length of an opening |
| d | Maximal width of an opening |
| $e_1$ | Longer characteristic length of the opening |
| $e_2$ | Shorter characteristic length of the opening |
| g | Grid thickness |
| s | Sheet material thickness |
| D | Maximum distance between at least adjacent of the at least two layers / corrugated sheets |
| SD | Stretch direction of expanded metal sheet |
| $u_1$ | Distance between two openings being adjacent in the direction perpendicular to the stretch direction of the expanded metal sheet |
| $u_2$ | Distance between two openings being adjacent in the stretch direction of the expanded metal sheet |
| V | Longitudinal direction, which is usually the vertical direction |
| W | Average layer width of a layer or a corrugated |

sheet

α    Angle between each of the peaks and each of the valleys with respect to the longitudinal direction

**Claims**

1. A structured cross-channel packing element (12) for a column (10) for mass transfer and/or heat exchange between a heavy and a light fluid phase, wherein the structured cross-channel packing element (12) comprises at least two adjacent layers (32, 32') made of sheets each comprising openings (40, 40', 40", 40‴), which are surrounded and separated from each other by separating elements (42), wherein at least two of the at least two layers (32, 32') are arranged parallel and in touching contact with each other so that an open space (30) extending from one end to the opposite end of the at least two layers (32, 32') is provided between them so that at least one of the heavy and the light fluid phase may flow through it, wherein neighboring openings (40, 40', 40", 40‴) in the sheet of at least one layer (32, 32') overlap with each other so that each cross-sectional plane of the at least one layer (32, 32') comprises at least one opening (40, 40', 40", 40‴), wherein the ratio between the average grid thickness g of at least one layer (32, 32') and the sheet material thickness s is at most 5.0, and wherein the average grid thickness g of at least one layer (32, 32') is less than 1.0 mm, wherein the sheet material thickness s means the thickness of the material, which forms the layers (32, 32'), and wherein the average grid thickness g of a layer (32, 32') is the average distance between a plane touching the outermost points of one of the two surfaces and a plane touching the outermost points of the opposite surface of the layer (32, 32').

2. The structured cross-channel packing element (12) according to claim 1, wherein at least 50%, preferably at least 75%, more preferably at least 80%, still more preferably at least 90%, yet more preferably at least 95% and most preferably all of the at least two layers (32, 32') comprise periodic deformations (26, 28), wherein the layers (32, 32') are oriented such that the periodic deformations (26, 28) of the adjacent layers (32, 32') intersect in crisscross fashion with the periodic deformations (26, 28) of the layers (32, 32') extending obliquely relative to the longitudinal direction (V), wherein each layer (32, 32') contacts each of the adjacent layers (32, 32') at points of intersection between the periodic deformations (26, 28) of the layer (32, 32') and those of the adjacent layers (32, 32') and wherein the open space (30) between the at least two layers (32, 32') is defined by the periodic deformations (26, 28).

3. The structured cross-channel packing element (12) according to claim 1 or 2, wherein the ratio between the average grid thickness g and the sheet material thickness s of at least one layer (32, 32') is 1.0 to less than 5.0, preferably more than 1.4 to 4.0, more preferably 1.8 to 3.0 and most preferably 2.0 to 2.6.

4. The structured cross-channel packing element (12) according to claim 3, wherein the ratio between the average grid thickness g and the sheet material thickness s of at least 50%, preferably at least 75%, more preferably at least 80%, still more preferably at least 90%, yet more preferably at least 95% and most preferably all of the at least two layers (32, 32') is at most 5.0, preferably 1.0 to less than 5.0, more preferably more than 1.4 to 4.0, even more preferably 1.8 to 3.0 and most preferably 2.0 to 2.6.

5. The structured cross-channel packing element (12) according to any of the preceding claims, wherein the average grid thickness g of at least one layer (32, 32') is 0.05 to 0.8 mm, preferably 0.07 to 0.5 mm and most preferably 0.1 to 0.4 mm.

6. The structured cross-channel packing element (12) according to claim 5, wherein the average grid thickness g of at least 50%, preferably at least 75%, more preferably at least 80%, still more preferably at least 90%, yet more preferably at least 95% and most preferably all of the at least two layers (32, 32') is less than 1.0 mm, preferably 0.05 to 0.8 mm, more preferably 0.07 to 0.5 mm and most preferably 0.1 to 0.4 mm.

7. The structured cross-channel packing element (12) according to any of the preceding claims, wherein at least 80% of all openings (40, 40', 40", 40‴) of at least one layer (32, 32') are arranged in several adjacent essentially vertical rows (44) and in several adjacent essentially horizontal rows (Y), wherein essentially vertical means a line having an angle with regard to the longitudinal direction of -10° to +10°, preferably -5° to +5° and most preferably 0°, wherein essentially horizonal means a line having an angle with regard to the longitudinal direction of 80° to 100°, preferably 85° to 95° and most preferably 90°, wherein in each essentially horizontal row (46) a line having an angle with regard to the longitudinal direction of 80° to 100°, preferably 85° to 95° and most preferably 90° crosses at least five openings (40, 40', 40", 40‴) through each a position at which the width of the respective opening (40, 40', 40", 40‴) is 60 to 100% of the maximal width (d) of the respective opening (40, 40', 40", 40‴) and in each essentially vertical row (44) a line having an angle with regard to the longitudinal direction of -10° to +10°, preferably -5° to +5° and most preferably 0° crosses at least five openings (40, 40', 40", 40‴) through each a position at which the length of the respective opening (40, 40', 40", 40''') is 60 to 100% of the maximal length (c) of the respective opening (40, 40', 40", 40''').

8. The structured cross-channel packing element (12) according to any of the preceding claims, wherein the openings (40, 40', 40", 40''') in the sheets of at least 50%, preferably at least 75%, more preferably at least 80%, still more preferably at least 90%, yet more preferably at least 95% and most preferably all of the at least two layers (32, 32') overlap with each other so that each cross-sectional plane of the at least one layer (32, 32') comprises at least one and preferably at least two openings (40, 40', 40", 40''') and preferably a plurality of openings (40, 40', 40", 40''').

9. The structured cross-channel packing element (12) according to any of the preceding claims, wherein at least one, preferably at least 50%, more preferably at least 75%, even more preferably at least 80%, still more preferably at least 90%, yet more preferably at least 95% and most preferably all of the at least two layers (32, 32') are obtainable or obtained by a method comprising the steps of cutting and stretching a thin metal plate and then deforming the expanded metal sheet to a corrugated sheet.

10. The structured cross-channel packing element (12) according to any of the preceding claims, wherein at least 50% of the segments (Y2) of at least one layer (32, 32'), which extend in the longitudinal direction of the structured cross-channel packing element (12) between a first line touching, seen in the longitudinal direction from top to bottom, the lowermost points of the openings (40, 40', 40", 40''') of a first essentially horizontal row (46) and a second line touching the uppermost points of the respective openings (40, 40', 40", 40''') of a second essentially horizontal row (46) comprising openings (40, 40', 40", 40''') being located in the same essentially vertical row (44) below and adjacent to the openings (40, 40', 40", 40''') of the first essentially horizontal row (46) and which extend in the direction being perpendicular to the longitudinal direction of the structured cross-channel packing element (12) from one end to the opposite end of the layer (32, 32'), comprise less openings (40, 40', 40", 40''') than the segments (Y1) being comprised between two adjacent segments (Y2).

11. The structured cross-channel packing element (12) according to any of the preceding claims, wherein at least 50%, preferably at least 75%, more preferably at least 80%, still more preferably at least 90%, yet more preferably at least 95% and most preferably all of the separating elements (42) comprise a protrusion (48), wherein the protrusion (48) is preferably arranged in a segment (Y2), which extends in the longitudinal direction of the structured cross-channel packing element (12) between a first line touching, seen in the longitudinal direction from top to bottom, the lowermost points of the openings (40, 40', 40", 40''') of a first essentially horizontal row (46) and a second line touching the uppermost points of the respective openings (40, 40', 40", 40''') of a second essentially horizontal row (46) comprising openings (40, 40', 40", 40''') being located in the same essentially vertical row (44) below and adjacent to the openings (40, 40', 40", 40''') of the first essentially horizontal row (46) and which extend in the direction being perpendicular to the longitudinal direction of the structured cross-channel packing element (12) from one end to the opposite end of the layer (32, 32').

12. The structured cross-channel packing element (12) according to claim 11, wherein the protrusion (48) has a height of 0.1 to 0.5 mm and preferably of 0.15 to 0.3 mm and/or the sum of the sheet material thickness s plus the height of the protrusion (48) is 50 to 100% and preferably 80 to 100% of the grid thickness g, and/or a base area of 0.25 to 25 mm$^2$ and preferably of 1 to 10 mm$^2$.

13. The structured cross-channel packing element (12) according claims 11 or 12, wherein the protrusion (48) comprises an edge, which has in the horizontal direction a maximum dimension over preferably at least 50%, more preferably at least 70%, even more preferably at least 90%, still more preferably at least 100%, yet more preferably at least 120% and most preferably at least 140% of the width b of adjacent separating elements (42).

14. Mass transfer column comprising at least one structured cross-channel packing element (12) according to any of the preceding claims.

15. Use of a structured cross-channel packing element (12) according to any of claims 1 to 13 for the mass transfer and/or heat exchange.

Fig. 1

Fig. 2a

Fig. 2b

Fig. 2c

Fig. 3

Fig. 4

Fig. 5

Fig. 6

Fig. 7a

Fig. 7b

Fig. 7c

**Fig. 8a**

**Fig. 8b**

## EUROPEAN SEARCH REPORT

**Application Number**

EP 24 17 6283

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/073859 A1 (SULZER MANAGEMENT AG [CH]) 22 April 2021 (2021-04-22) * page 24, line 11 - page 28, line 22; figures * | 1-15 | INV. B01J19/32 |
| Y | US 2024/116022 A1 (WEHRLI MARC [CH] ET AL) 11 April 2024 (2024-04-11) * paragraph [0047]; figures; table 1 * | 1-15 | |
| A | US 2024/109118 A1 (AUSNER ILJA [DE] ET AL) 4 April 2024 (2024-04-04) * paragraphs [0002], [0006] - [0014], [0032], [0033], [0041] - [0052] * | 1-15 | |
| A | US 2018/353927 A1 (NIEUWOUDT IZAK [US] ET AL) 13 December 2018 (2018-12-13) * the whole document * | 1-15 | |
| A | US 6 276 045 B1 (BUECHI FRANZ [CH] ET AL) 21 August 2001 (2001-08-21) * the whole document * | 1-15 | **TECHNICAL FIELDS SEARCHED (IPC)** |
| A | US 5 876 638 A (SUNDER SWAMINATHAN [US] ET AL) 2 March 1999 (1999-03-02) * the whole document * | 1-15 | B01J |

The present search report has been drawn up for all claims

| Place of search | Date of completion of the search | Examiner |
|---|---|---|
| Munich | 8 October 2024 | Kurtulan Dogan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6283

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | Publication date | Patent family member(s) | | Publication date |
|---|---|---|---|---|
| WO 2021073859 A1 | 22-04-2021 | AU | 2020368972 A1 | 05-05-2022 |
| | | BR | 112022007115 A2 | 05-07-2022 |
| | | CA | 3153266 A1 | 22-04-2021 |
| | | CN | 114761120 A | 15-07-2022 |
| | | EP | 3808446 A1 | 21-04-2021 |
| | | EP | 4021632 A1 | 06-07-2022 |
| | | JP | 2022551191 A | 07-12-2022 |
| | | KR | 20220078666 A | 10-06-2022 |
| | | TW | 202116390 A | 01-05-2021 |
| | | US | 2024116021 A1 | 11-04-2024 |
| | | WO | 2021073859 A1 | 22-04-2021 |
| US 2024116022 A1 | 11-04-2024 | AU | 2020368580 A1 | 26-05-2022 |
| | | BR | 112022007116 A2 | 05-07-2022 |
| | | CA | 3153871 A1 | 22-04-2021 |
| | | CN | 114761121 A | 15-07-2022 |
| | | EP | 3808445 A1 | 21-04-2021 |
| | | EP | 4021633 A1 | 06-07-2022 |
| | | JP | 2022552661 A | 19-12-2022 |
| | | KR | 20220078667 A | 10-06-2022 |
| | | TW | 202114766 A | 16-04-2021 |
| | | US | 2024116022 A1 | 11-04-2024 |
| | | WO | 2021073860 A1 | 22-04-2021 |
| US 2024109118 A1 | 04-04-2024 | BR | 112022007132 A2 | 05-07-2022 |
| | | CN | 114761119 A | 15-07-2022 |
| | | EP | 3808447 A1 | 21-04-2021 |
| | | EP | 4021634 A1 | 06-07-2022 |
| | | JP | 2022552334 A | 15-12-2022 |
| | | KR | 20220078668 A | 10-06-2022 |
| | | TW | 202114767 A | 16-04-2021 |
| | | US | 2024109118 A1 | 04-04-2024 |
| | | WO | 2021073861 A1 | 22-04-2021 |
| US 2018353927 A1 | 13-12-2018 | AU | 2018279277 A1 | 05-12-2019 |
| | | BR | 112019023261 A2 | 26-05-2020 |
| | | CA | 3060386 A1 | 13-12-2018 |
| | | CN | 110678256 A | 10-01-2020 |
| | | EP | 3634622 A1 | 15-04-2020 |
| | | JP | 7254031 B2 | 07-04-2023 |
| | | JP | 2020523183 A | 06-08-2020 |
| | | KR | 20200018566 A | 19-02-2020 |
| | | RU | 2019141741 A | 12-07-2021 |
| | | SG | 11201909574U A | 28-11-2019 |
| | | TW | 201904661 A | 01-02-2019 |
| | | US | 2018353927 A1 | 13-12-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 17 6283

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | | Publication date | Patent family member(s) | | Publication date |
|---|---|---|---|---|---|
| | | | WO 2018224949 A1 | | 13-12-2018 |
| | | | ZA 201906833 B | | 24-02-2021 |
| US 6276045 | B1 | 21-08-2001 | AU | 756567 B2 | 16-01-2003 |
| | | | BR | 9914884 A | 15-01-2002 |
| | | | CA | 2348263 A1 | 04-05-2000 |
| | | | CN | 1331615 A | 16-01-2002 |
| | | | EP | 1124632 A2 | 22-08-2001 |
| | | | ID | 29109 A | 26-07-2001 |
| | | | JP | 2002528247 A | 03-09-2002 |
| | | | KR | 20010080350 A | 22-08-2001 |
| | | | US | 6276045 B1 | 21-08-2001 |
| | | | WO | 0024506 A2 | 04-05-2000 |
| US 5876638 | A | 02-03-1999 | CA | 2204703 A1 | 14-11-1997 |
| | | | DE | 69702477 T2 | 19-04-2001 |
| | | | EP | 0807462 A1 | 19-11-1997 |
| | | | JP | 2977128 B2 | 10-11-1999 |
| | | | JP | H1043582 A | 17-02-1998 |
| | | | KR | 970074645 A | 10-12-1997 |
| | | | PL | 319811 A1 | 24-11-1997 |
| | | | TW | 349878 B | 11-01-1999 |
| | | | US | 5876638 A | 02-03-1999 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 1253673
- CA 1270751
- US 6206349 B1
- WO 2021073859 A1
- GB 1569828 A
- US 4981621 A

**Non-patent literature cited in the description**

- Recommended Test Mixtures for Distillation Columns. **U. ONKEN** ; **W. ARLT**. The Institution of Chemical Engineers. 1990
- **M. R. FENSKE**. *Ind. Engng. Chem*, 1932, vol. 24, 482